# EUROPÄISCHE PATENTSCHRIFT

(11) **EP 2 796 320 B1**
(45) Veröffentlichungstag und Bekanntmachung des Hinweises auf die Patenterteilung: **03.02.2016**
(21) Anmeldenummer: 14160602.0
(22) Anmeldetag: 18.03.2014
(51) Int. Cl.: B60Q 1/068

(54) **Kraftfahrzeugscheinwerfer**
Motor vehicle headlamp
Phare de véhicule automobile

(30) Priorität: 22.04.2013 DE 102013207285
(43) Veröffentlichungstag der Anmeldung: 29.10.2014
(73) Patentinhaber: Automotive Lighting Reutlingen GmbH, 72762 Reutlingen (DE)
(72) Erfinder: Fähnle, Andres, 72973 Pfullingen (DE); Müller, Alexander, 72764 Reutlingen (DE); Dürr, Albrecht, 72810 Gomaringen (DE)
(74) Vertreter: DREISS Patentanwälte PartG mbB

(56) Entgegenhaltungen:
- EP-A2- 1 391 347
- DE-A1- 2 651 682
- DE-A1- 3 722 581
- DE-A1- 10 003 929
- US-A1- 2008 266 890

## Beschreibung

Die Erfindung betrifft einen Kraftfahrzeugscheinwerfer nach dem Oberbegriff des Anspruchs 1.

Ein solcher Kraftfahrzeugscheinwerfer weist ein erstes Lichtmodul und ein zweites Lichtmodul auf, wobei jedes der beiden Lichtmodule um eine erste Achse und um eine zweite Achse schwenkbar im Gehäuse des Scheinwerfers angeordnet ist. Die beiden Lichtmodule sind über eine Koppelmechanik beweglich so miteinander verbunden, dass sich eine um die jeweils erste Achse eines der beiden Lichtmodule erfolgende Schwenkbewegung auf das jeweils andere Lichtmodul überträgt.

Ein solches Lichtmodul wird hier als per se bekannt vorausgesetzt. Ein Lichtmodul mit diesen Merkmalen ist zum Beispiel aus der EP 1 391 347 A2 bekannt. Aus der US 2008/0266890 A1 ist ein Scheinwerfer mit drei Lichtmodulen und einen Kurvenlichtfunktion bekannt. Die drei Lichtmodule sind über Zahnräder oder Hebel miteinander gekoppelt. Die Schwenkbewegung der drei Lichtmodule wird von einem einzigen Elektromotor angetrieben.

Die DE 100 03 929 zeigt eine Anordnung getrennter Scheinwerfergehäuse, in denen jeweils ein Lichtmodul schwenkbar angeordnet. Die Schwenkbewegung beider Lichtmodule wird von einem einzigen Elektromotor angetrieben und mit einem Bowdenzug von dem einen Lichtmodul zu dem anderen Lichtmodul übertragen.

Die DE OS 26 51 682 zeigt ein ähnliche System.

Dort geht es um eine Leuchtweiteneinstellung von zwei Scheinwerfern. Die Leuchtweite beider Scheinwerfer wird gemeinsam manuell von einem Armaturenbrett aus verstellt. Die Stellbewegung wird mit einem Zug auf die Scheinwerfer übertragen. Die Scheinwerfer sind dabei über Züge und/oder Gestänge miteinander gekoppelt.

Die Schwenkbarkeit erlaubt jeweils eine Verstellung der Richtung des abgestrahlten Lichtbündels in einer zurjeweiligen Achse senkrechten Richtung.

Insbesondere bei stark gepfeilten modernen Scheinwerfern wird eine Lichtfunktion häufig von mehreren, gemeinsam betriebenen Lichtmodulen verwirklicht, von denen jedes einen Teil einer insgesamt zu erzeugenden Lichtverteilung erzeugt. Unter einer Lichtfunktion wird dabei die Funktion verstanden, eine bestimmte regelkonforme Lichtverteilung zu erzeugen. Ein Beispiel einer solchen Lichtverteilung ist eine Fernlichtverteilung, die durch einen gleichzeitigen Betrieb eines Abblendlichtmoduls und eines Bereiche oberhalb der Hell-Dunkel-Grenze des Abblendlichtmoduls ausleuchtenden Fernlichtmoduls erzeugt wird. Die Lichtmodule sind meist in Fahrtrichtung stark zueinander versetzt angeordnet.

Um regelkonforme Lichtverteilungen erzeugen zu können, müssen die Abstrahlrichtungen der Lichtmodule relativ zueinander justiert werden und außerdem muss im Fahrzeug noch eine Grundeinstellung erfolgen, mit der die Abstrahlrichtungen insgesamt regelkonform eingestellt werden. Dieser Grundeinstellung ist im Betrieb unter Umständen noch eine automatisch erfolgende Regelung der Leuchtweite überlagert, mit der ein Einfluss unterschiedlicher Fahrzeugneigungen durch Beladungen und/oder dynamische Achslastverlagerungen kompensiert wird.

Mit der Justage werden Fertigungstoleranzen des Scheinwerfers ausgeglichen. Folglich ist unter Justage eine einmalige Einstellung eines Lichtmoduls im Scheinwerfer relativ zu einem anderen Lichtmodul zu verstehen. In der Regel wird die Justage mit Hilfe eines Spezialwerkzeuges im Scheinwerferfertigungswerk durchgeführt. Die Verwendung eines Spezialwerkzeuges erfolgt mit dem Ziel, Manipulationen durch später mögliche unsachgemäße Eingriffe zu erschweren. Die Grundeinstellung kann dagegen während der Fahrzeuglebensdauer wiederholt werden und dient zur Einstellung der Scheinwerfer im eingebauten Zustand relativ zur Fahrbahn. Die Grundeinstellung ist vom Endkunden oder einer Servicewerkstatt durchzuführen.

Mit der der Grundeinstellung überlagerten Leuchtweitenregelung wird ein Abstrahlwinkel des Scheinwerfers relativ zur Fahrbahn gegengleich zu einer Änderung der Neigung der Fahrzeugkarosserie verändert, die in einer Längsrichtung des Kraftfahrzeugs auftritt. Die Leuchtweitenregulierung kann automatisch oder manuell erfolgen.

Die oben genannte Koppelmechanik dient dazu, die Abstrahlrichtungen der gemeinsam zu betreibenden Lichtmodule in einer aufeinander abgestimmten Weise gemeinsam zu verstellen. Dies gilt insbesondere für um horizontale Achsen herum erfolgende Verstellungen. In der Regel wird man beide Lichtmodule zeitgleich mit gleichem Verstellwinkel um ihre jeweilige horizontale Achse verstellen wollen. Somit ist auch gewährleistet, dass eine Leuchtweitenregelung beide Lichtmodule gleichzeitig und in gleiche Richtungen und um gleiche Verstellwinkel verstellt. Die Bewegung der Lichtmodule um ihre jeweilige vertikale Achse ist in der Regel nicht gekoppelt.

Jedes der Lichtmodule weist eine erste und eine zu der ersten Achse senkrecht stehende zweite Achse auf.

Die beiden Lichtmodule sind jeweils um ihre Achsen schwenkbar. Die erste Achse und die zweite Achse schneiden sich in einem Punkt. Die erste Achse und die zweite Achse spannen eine Ebene auf, in der das Lichtmodul gelagert ist so dass eine Rotation der Lagerebene um die erste Achse einen Winkel verändert, den das von dem Lichtmodul ausgehende Licht mit einer Ebene einschließt, die zum Beispiel parallel zur Fahrbahn orientiert ist. Die Rotation der Lagerebene um die zweite Achse verändert dann einen Winkel, den das von dem Lichtmodul ausgehende Licht mit einer Ebene einschließt, die von der Fahrzeuglängsachse und der Fahrzeugquerachse aufgespannt wird.

Um eines der Lichtmodule in Relation zum anderen Lichtmodul zu justieren wird die erste Achse des entsprechenden Lichtmoduls bewegt. Für eine Justierung in vertikaler Richtung wird die erste Achse in vertikaler Richtung verschoben. Die Justierung in horizontaler Richtung erfolgt durch Rotation der ersten Achse um die zweite Achse. Diese Justage des Lichtmoduls ist aufwändig und fehlerträchtig.

Bei der Grundeinstellung der Lichtmodule in der zur Fahrbahn parallelen Ebene, werden die Lichtmodule jeweils um ihre zweiten Achsen geschwenkt und damit nach links oder rechts verstellt. Diese horizontale Bewegung ist in der Regel nicht synchronisiert. Zur Grundeinstellung der Lichtmodule in der zur Fahrbahn vertikalen Richtung wird die Lagerebene der Lichtmodule um die jeweilige erste Achse herum geschwenkt, so dass das jeweilige Lichtbündel nach oben oder nach unten geschwenkt wird.

Diese vertikale Verstellung der Lichtbündel wird durch die Koppelmechanik synchronisiert. Die Achsen von jedem der beiden Lichtmodule schneiden sich in dem gemeinsamen Punkt und spannen eine Lagerebene auf. Die Lagerebenen liegen parallel zueinander. Die Lichtmodule sind aufgrund der starken Pfeilform der Scheinwerfer in Fahrtrichtung versetzt auch hintereinander angeordnet. Diese geometrischen Bedingungen haben zur Folge, dass je nach Anordnung der Lichtmodule und Gestaltung der Designteile im Scheinwerfer, Funktionsbereiche eines der beiden Lichtmodule in einen von außen sichtbaren Bereich des Scheinwerfers ragen oder einen Strahlengang des anderen Lichtmoduls teilweise abschatten.

Funktionsbereiche sind dabei nicht unmittelbar der Lichterzeugung dienende Elemente des Lichtmoduls wie Halterahmen, Lager Achsen, Antriebe und Verstellmechaniken. Die Sichtbarkeit von außen beeinträchtigt das Erscheinungsbild und das Hineinragen in den Strahlengang beeinträchtigt die lichttechnischen Eigenschaften des Scheinwerfers. Beides ist nachteilig.

Vor diesem Hintergrund besteht die Aufgabe der Erfindung in der Angabe eines Kraftfahrzeugscheinwerfers der eingangs genannten Art, der diese Nachteile nicht aufweist. Die Aufgabe wird von einem Kraftfahrzeugscheinwerfer mit den Merkmalen des Anspruchs 1 gelöst.

Der erfindungsgemäße Scheinwerfer zeichnet sich dadurch aus, dass die Koppelmechanik eine zwei Krafteinleitungspunkte aufweisende erste Koppelstange, einen zwei Krafteinleitungspunkte und eine Lagerung aufweisenden zweiseitigen Hebel und eine zwei Krafteinleitungspunkte aufweisende zweite Koppelstange aufweist, wobei der Hebel in seiner Lagerung um die im Scheinwerfer liegende erste Achse schwenkbar gelagert ist, die erste Koppelstange in einem ihrer Krafteinleitungspunkte so an das erste Lichtmodul und in ihrem anderen Krafteinleitungspunkt an einen ersten Krafteinleitungspunkt des Hebels angelenkt ist, dass ein Punkt des ersten Lichtmoduls durch die erste Koppelstange mit dem ersten Krafteinleitungspunkt des zweiseitigen Hebels verbunden ist und dass die zweite Koppelstange in einem ihrer Krafteinleitungspunkte so an das zweite Lichtmodul und in ihrem anderen Krafteinleitungspunkt so an einen zweiten Krafteinleitungspunkt des Hebels angelenkt ist, dass der zweite Krafteinleitungspunkt des Hebels mit einem Ende der zweiten Koppelstange gelenkig verbunden ist, deren anderes Ende mit einem Punkt F des zweiten Lichtmoduls gelenkig verbunden ist.

Diese Koppelmechanik hat die Eigenschaft, dass eine in einer ersten Richtung erfolgende Bewegung des ersten Krafteinleitungspunktes des zweiseitigen Hebels eine in eine zweite Richtung erfolgende Bewegung des zweiten Krafteinleitungspunktes des zweiseitigen Hebels hervorruft. Die Lagerung bildet eine Spitze des Dreiecks. Der Winkel des Dreiecks, dessen Scheitel mit der Spitze zusammenfällt, ergibt sich auch zwischen den Bewegungsrichtungen der beiden Krafteinleitungspunkte des Hebels.

Dadurch, dass sich die Krafteinleitungspunkte in verschiedene Richtungen bewegen, können auch die Lagerebenen der beiden Lichtmodule in nicht parallelen Ebenen liegen. Als Folge ist es möglich, die in der Lichtabstrahlrichtung weiter vorn liegende Lagerebene so anzuordnen, dass das vordere Lichtmodul weniger weit oder gar nicht mehr in den Strahlengang des hinteren Lichtmoduls hineinragt und dass Funktionsbereiche des ersten Lichtmoduls im Scheinwerfer gewissermaßen aus dem Blickfeld eines von außen in den Scheinwerfer blickenden Betrachters herausgerückt angeordnet sind.

Eine bevorzugte Ausgestaltung zeichnet sich dadurch aus, dass die erste Achse bei einer bestimmungsgemäßen Verwendung des Kraftfahrzeugscheinwerfers im Fahrzeug horizontal und die zweite Achse bei der bestimmungsgemäßen Verwendung vertikal angeordnet ist, und dass die erste Achse und die zweite Achse eines Lichtmoduls jeweils einen gemeinsamen Punkt aufweisen.

Der Hebel wandelt zum Beispiel eine Bewegung, die in Fahrzeuglängsrichtung erfolgt und mit der das erste Lichtmodul um seine erste Achse schwenkt, in eine parallel zur Fahrzeughochachse erfolgende Aufwärtsbewegung oder Abwärtsbewegung um. Diese Aufwärts oder Abwärtsbewegung schwenkt das zweite Lichtmodul um seine erste Achse. Dadurch ist es insbesondere möglich, dass die Lagerebene eines der beiden Lichtmodule senkrecht oder zumindest um einen konstruktiv vorgebbaren Winkel geneigt zu der Lagerebene des anderen der beiden Lichtmodule steht. Die Lagerebene des zweiten Lichtmoduls nimmt in einer bevorzugten Ausgestaltung eine Lage ein, die im Wesentlichen horizontal im Fahrzeug angeordnet ist. Dadurch lässt sie sich insbesondere hinter designrelevanten Bauteilen wie Sichtblenden anordnen, so dass diese Funktionsbereiche des zugehörigen Lichtmoduls von außen nicht sichtbar sind. Durch die bei einer vertikalen Anordnung der Lagerebene des ersten Lichtmoduls horizontale Anordnung des zweiten Lichtmoduls lässt sich eine beim Stand der Technik durch das zweite Lichtmodul erfolgende Abschattung des Strahlengangs des zweiten Lichtmoduls weitgehend vermeiden, weil insbesondere Funktionsbereiche des zweiten Lichtmoduls nicht mehr in den Strahlengang hineinragen müssen.

Aus diesem Grund sieht eine besonders bevorzugte Ausgestaltung vor, dass die Hebelarme des zweiseitigen Hebels sich in dessen Lagerung senkrecht zueinander schneiden.

Aufgrund der Kinematik des Kurbeltriebs, den der zweiseitige Hebel zusammen mit den Koppelstangen bildet, kann es bei der Rotation des Hebels um die Lagerung unter Umständen zu einer Abweichung zwischen den Amplituden der Stellbewegungen des ersten Lichtmoduls und des zweiten Lichtmoduls kommen. Durch die zueinander senkrechte Anordnung der Hebelarme wird diese sonst mögliche Abweichung zwischen den Rotationsbewegungen des ersten Lichtmoduls und des zweiten Lichtmoduls auch minimiert.

Weiterhin wird vorgeschlagen, dass die Lagerung des Hebels auf einem Schlitten ortsfest angeordnet ist. Bevorzugt ist auch, dass der Schlitten in einer Führung in Lichtabstrahlrichtung verschiebbar im Gehäuse angeordnet ist. Die Führung ist bevorzugt ortsfest im Gehäuse angeordnet. Durch die Verschiebung der Lagerung des Hebels parallel zur Fahrtrichtung dreht sich der Hebel um seinen ersten Krafteinleitungspunkt . Dadurch wird der zweite Krafteinleitungspunkt auch senkrecht nach oben oder unten verschoben. Die zweite Koppelstange überträgt diese Bewegung in den dritten Punkt der Lagerebene des zweiten Lichtmoduls. Dadurch rotiert die Lagerebene um die erste Achse und der Abstrahlwinkel des zweiten Lichtmoduls verändert sich in vertikaler Richtung unabhängig von einem Abstrahlwinkel des ersten Lichtmoduls. Die bevorzugte Anordnung des Hebels auf einem verschiebbaren Schlitten ermöglicht also eine vertikale Justage des zweiten Lichtmoduls in Relation zum ersten Lichtmodul.

Ergänzend wird vorgeschlagen, dass die erste Achse des zweiten Lichtmoduls durch dessen Schwerpunkt geht. Die Umlenkung der Bewegung beziehungsweise der Kraft, die die Rotation um die erste Achse erzeugt, von einer waagrechten Richtung am ersten Lichtmodul in eine senkrechte Richtung am zweiten Lichtmodul, ermöglicht es, dass ein Abstand von dem dritten Punkt bis zur horizontalen Achse bei dem zweiten Lichtmodul vom Abstand der horizontalen Achse vom dritten Punkt des ersten Lichtmoduls abweichen kann. Dadurch ist es möglich, die erste Achse des ersten Lichtmoduls und/oder des zweiten Lichtmoduls so zu verschieben, dass der Schwerpunkt des jeweiligen Lichtmoduls auf der ersten Achse liegt. Als Folge übt die Gewichtskraft des Lichtmoduls kein Moment auf die erste Achse aus, so dass das Lichtmodul mechanisch stabiler gelagert ist.

Durch eine geeignete Dimensionierung (Länge) der Hebelarme können die Verstellwinkel der Module angepasst werden. In dem Fall müsste der Abstand zwischen H und I verkleinert werden, damit die Verstellung der Module synchron bleibt. Das ist auch ein wesentlicher Vorteil gegenüber dem Stand der Technik, bei dem eine andere Aufhängung wesentlich umfangreichere Änderungen mit sich bringt.

Weiterhin wird vorgeschlagen, dass die Koppelmechanik spielfrei und reibungsarm ausgeführt ist. Die spielfreie und reibungsarme Lagerung des Hebels, der ersten Koppelstange und der zweiten Koppelstange reduziert die Abweichung der Rotation des zweiten Lichtmoduls um seine erste Achse gegenüber der Rotation des ersten Lichtmoduls um seine erste Achse. Dadurch wird die Gleichheit der Bewegung der Lichtmodule bei der Grundeinstellung der Lichtmodule und bei deren Verstellung durch die Leuchtweitenregelung im späteren Betrieb gesteigert. Jedes Spiel könnte nämlich zu eine unerwünschten Hysterese im Bewegungsverhalten führen.

Eine solche spielfreie und reibungsarme Koppelmechanik wird bevorzugt mit Kugelgelenken verwirklicht. Eine Kugelpfanne aus elastischem Material weist bevorzugt einen inneren Durchmesser auf, der etwas kleiner ist als der Durchmesser der Kugel, der von der Pfanne aufgenommen wird. Die Pfanne weist bevorzugt einen Schlitz auf, der eine elastische Anpassung des Pfannendurchmessers an den Kugeldurchmesser erlaubt. Als reibungsarme Materialpaarung wird bevorzugt eine Metall-Kunststoffpaarung oder eine Kunststoff-Kunststoff-Paarung verwendet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen, jeweils in schematischer Form:
- Figur 1: einen als bekannt vorausgesetzten Kraftfahrzeugscheinwerfer in einer Vorderansicht;
- Figur 2: den Kraftfahrzeugscheinwerfer aus der Fig. 1 in einer Seitenansicht;
- Figur 3: ein Ausführungsbeispiel eines erfindungsgemäßen Kraftfahrzeugscheinwerfers in einer Seitenansicht; und
- Figur 4: eine weitere Ausgestaltung eines erfindungsgemäßen Kraftfahrzeugscheinwerfers in einer Seitenansicht.

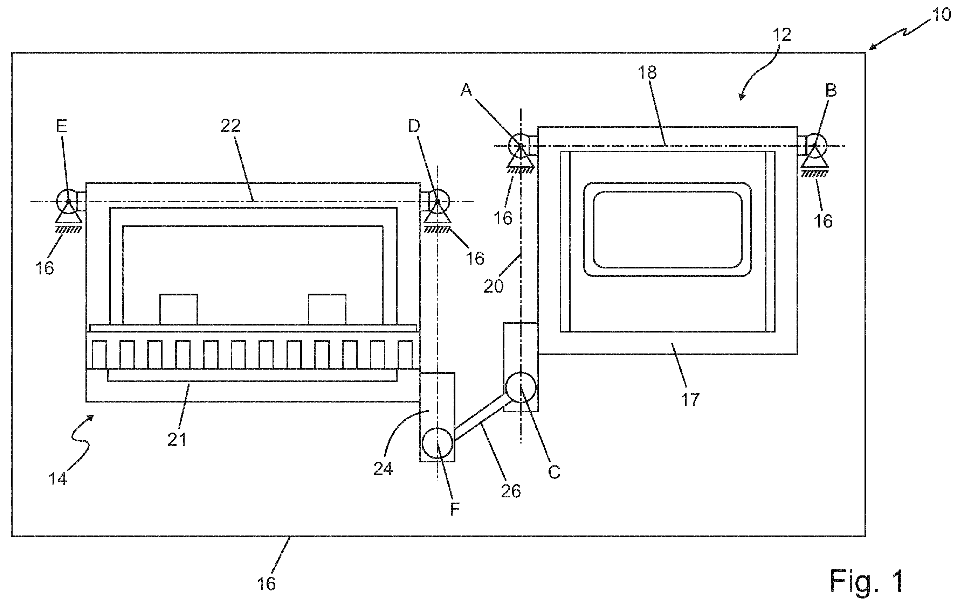

Figur 1 zeigt einen Kraftfahrzeugscheinwerfer 10 mit einem ersten Lichtmodul 12 und einem zweiten Lichtmodul 14. Das erste Lichtmodul 12 ist beispielsweise als LED-Abblendlicht- Projektionssystem ausgeführt, von dem in der Fig.1 die Linse der Sekundäroptik zu sehen ist. Das zweite Lichtmodul 14 ist beispielsweise als LED-Fernlicht-Reflexionssystem ausgeführt, von dem in der Figur 1 zwei Reflektoren mit jeweils einer LED zu sehen sind, die auf einer Platine in thermischem Kontakt mit einem Kühlrippen aufweisenden Kühlkörper befestigt sind. Speziell bei LED-Scheinwerfern ist das erste Lichtmodul 12 bevorzugt als Spotlichtmodul und zweite Lichtmodul 14 als Grundlichtmodul ausgebildet. Das Spotlichtmodul ist von der Fahrzeugmitte her betrachtet weiter außen angeordnet. Bei dem dargestellten Scheinwerfer handelt es sich demnach um einen in Fahrtrichtung linken Scheinwerfer, der von einem in der Lichtabstrahlrichtung liegenden Punkt aus betrachtet wird. Die beiden Lichtmodule 12 und 14 sind in einem Gehäuse 16 des Scheinwerfers 10 so angeordnet, dass sie jeweils einzeln oder auch gemeinsam in einem Vorfeld des Kraftfahrzeugs eine oder mehrere regelkonforme Lichtverteilungen erzeugen. Die Hauptabstrahlrichtung der Lichtmodule 12, 14 die bei einer bestimmungsgemäßen Verwendung des Scheinwerfers 10 in ein Vorfeld des Kraftfahrzeugs weist, zeigt in der Figur 1 aus der Zeichenebene heraus auf den Betrachter.

Es sei darauf hingewiesen, dass sich alle nachfolgend verwendeten Lagebezeichnungen wie oben, unten, horizontal, vertikal, waagrecht und senkrecht auf die bestimmungsgemäße Verwendung des Scheinwerfers in einem Kraftfahrzeug beziehen, das auf einem ebenen, nicht geneigten Untergrund steht. Insbesondere bezieht sich die Lagebezeichnung horizontal auf den Horizont vor dem Fahrzeug, während mit einer vertikalen Richtung stets eine zum Horizont und zur Fahrzeuglängsachse senkrechte Richtung gemeint ist, wobei die Fahrzeuglängsachse quer zum Horizont ausgerichtet sein soll.

Das erste Lichtmodul 12 weist einen Halterahmen 17 auf, der in zwei Punkten im Gehäuse 16 aufgenommen ist. Ein erster Punkt A ist als Festlager ausgebildet. Der Punkt A ist ortsfest im Gehäuse 16 angeordnet. Ein zweiter Punkt B ist als Loslager ausgebildet. Der zweite Punkt B ist verstellbar beweglich im Gehäuse 16 aufgenommen. Details dazu werden weiter unten erläutert. Der Halterahmen 17 ist um eine erste, horizontal liegende Achse 18 herum schwenkbar im Gehäuse 16 gelagert. Eine um diese Achse 18 herum erfolgende Schwenkbewegung schwenkt das von dem Lichtmodul 12 abgestrahlte Lichtbündel nach oben oder nach unten, was eine Einstellung der Lage des Lichtbündels in Bezug auf den Horizont erlaubt. Dies beeinflusst die Reichweite und die von dem Lichtbündel für den Gegenverkehr ausgehende Blendgefahr.

Der für diese Zwecke erforderliche Schwenkwinkel ist kleiner als +/- 5°, wobei sich diese Abweichung auf eine neutrale Nullage bezieht, die zum Beispiel durch den Horizont definiert wird. Die erste Achse 18 ist einerseits in dem ersten Punkt A und andererseits in dem zweiten Punkt B frei drehbar gelagert. Weiterhin ist der Halterahmen 17 um eine zweite, vertikal liegende Achse 20 herum schwenkbar im Gehäuse 16 gelagert. Die zweite Achse 20 ist einerseits in dem ersten Punkt A und andererseits in einem dritten Punkt C frei drehbar gelagert.

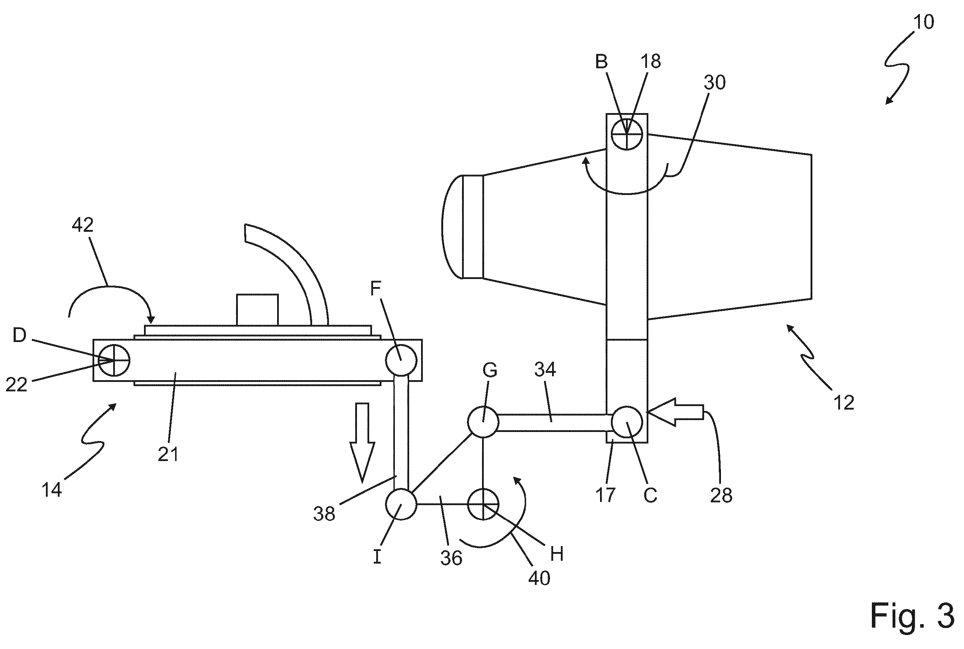

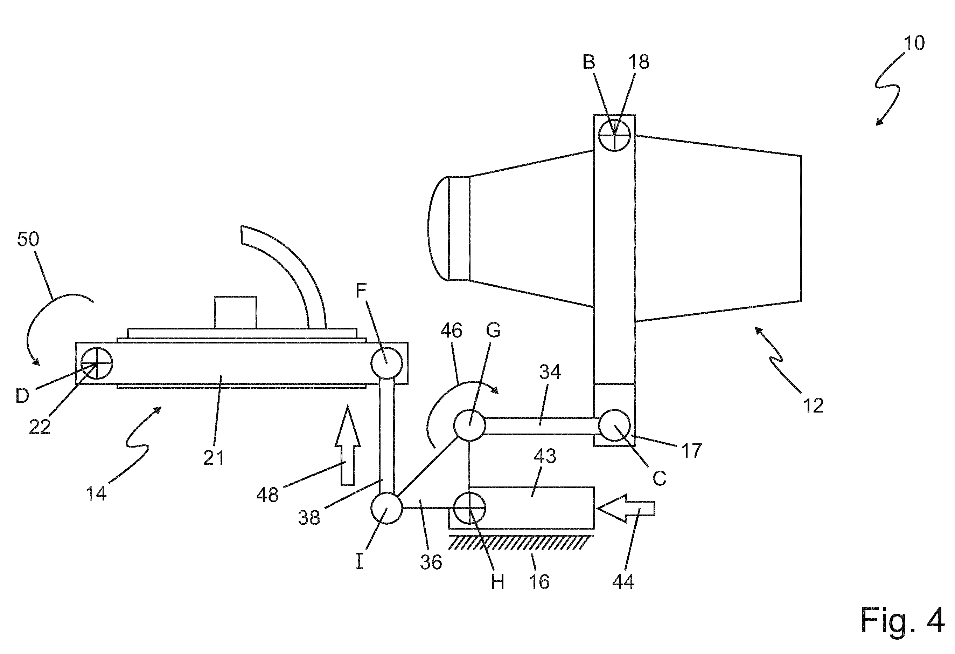

Der dritte Punkt C ist starr mit dem Halterahmen 17 verbunden und bewegt sich daher mit diesem mit, wenn der Halterahmen 17 um die erste Achse 18 geschwenkt wird. Damit kann die Lage der zweiten Achse 20 um die Schwenkwinkel, die bei den um die erste Achse 18 erfolgenden Schwenkbewegungen auftreten, von einer genau lotrechten Lage abweichen. Diese Winkel sind jedoch klein, so dass eine entsprechend mitgeschwenkte zweite Achse hier immer noch als vertikal liegende oder vertikale Achse verstanden wird. Dies gilt auch für die weiter unten unter Bezug auf die Figuren 3 und 4 erläuterten Ausführungsbeispiele erfindungsgemäßer Scheinwerfer.

Das zweite Lichtmodul 14 ist in einem Halterahmen 21 angeordnet, der in zwei Punkten im Gehäuse 16 aufgenommen ist. Ein erster Punkt D und ein zweiter Punkt E sind als Loslager ausgebildet, die beide verstellbar beweglich im Gehäuse 16 gehalten sind. Details dazu werden weiter unten genannt. Der Halterahmen 21 ist um eine erste, horizontal liegende Achse 22 schwenkbar gelagert. Die erste Achse 22 ist einerseits in dem ersten Punkt D und andererseits in dem zweiten Punkt E frei drehbar gelagert. Auch hier gilt, dass eine entsprechende Schwenkbewegung die Reichweite und die von dem Lichtbündel für den Gegenverkehr ausgehende Blendgefahr beeinflusst.

Weiterhin ist das zweite Lichtmodul 14 um eine zweite, vertikal liegende Achse 24 schwenkbar gelagert. Die zweite Achse 24 ist beidseitig in dem ersten Punkt D und einem dritten Punkt F frei drehbar gelagert. Der dritte Punkt F ist starr mit dem Halterahmen 19 verbunden. Für die vertikale Anordnung der zweiten Achse 24 des zweiten Lichtmoduls 14 gilt insofern dasselbe wie für die vertikale Anordnung der zweiten Achse 20 des ersten Lichtmoduls 12, als dass kleine Abweichungen von einer genau lotrechten Lage immer noch als vertikale Lagen verstanden werden sollen.

Die Schwenkbewegung der Lichtmodule um ihre jeweils vertikal liegende Achse erlaubt eine Einstellung der Abstrahlrichtung in der horizontalen Ebene, also nach rechts und nach links. Dies gilt auch für die weiter unten unter Bezug auf die Figuren 3 und 4 erläuterten Ausführungsbeispiele erfindungsgemäßer Scheinwerfer.

Die Lagerung der Halterahmen in dem ersten Punkt und dem zweiten Punkt, die so erfolgt, dass der Halterahmen um die erste Achse und die zweite Achse frei schwenkbar ist, lässt sich beispielsweise mittels Kugelgelenken ausführen. Dabei weisen der erste Punkt und der zweite Punkt jeweils eine Kugel auf. Die Kugeln werden in entsprechende Aufnahmen eingeklemmt. Zur Realisierung eines Festlagers sind die Aufnahmen starr mit dem Gehäuse 16 verbunden. Ein Loslager ist durch relativ zum Gehäuse 16 in starr mit dem Gehäuse 16 verbundenen Führungen verschiebbaren Aufnahmen zu verwirklichen. Dies gilt auch für die weiter unten unter Bezug auf die Figuren 3 und 4 erläuterten Ausführungsbeispiele erfindungsgemäßer Scheinwerfer.

Die erste Achse und die zweite Achse eines Lichtmoduls spannen zusammen eine Ebene auf, in der das jeweilige Lichtmodul gelagert ist. Eine Rotation dieser Lagerebene oder des Halterahmens um die erste Achse verändert den Winkel zwischen dem von dem entsprechenden Lichtmodul abgestrahlten Licht und einer zur Fahrbahn parallelen horizontalen Ebene. Eine Lichtverteilung, die das Lichtmodul im Vorfeld des Kraftfahrzeugs erzeugt, wird durch die Rotation der Lagerebene um die erste Achse in vertikaler Richtung nach oben oder unten verschoben.

Eine regelkonforme Lichtverteilung stellt sich bei einem Winkel ein, der insofern einen Sollwinkel definiert. Geringe Abweichungen von dem Sollwinkel nach unten führen zu einer erheblichen Verkürzung der geometrischen Reichweite des Scheinwerfers. Eine geringfügige Abweichung von dem Sollwinkel nach oben erhöht die Gefahr einer Blendung entgegenkommender Verkehrsteilnehmer. Dies gilt auch für die weiter unten unter Bezug auf die Figuren 3 und 4 erläuterten Ausführungsbeispiele erfindungsgemäßer Scheinwerfer.

Eine Rotation der Lagerebene oder des Halterahmens um die zweite Achse verschiebt die Lichtverteilung des entsprechenden Lichtmoduls im Vorfeld des Kraftfahrzeugs in horizontaler Richtung nach links oder rechts. Dies gilt auch für die weiter unten unter Bezug auf die Figuren 3 und 4 erläuterten Ausführungsbeispiele erfindungsgemäßer Scheinwerfer.

Eine Koppelstange 26 verbindet den dritten Punkt C des ersten Lichtmoduls 12 mit dem dritten Punkt F des zweiten Lichtmoduls 14. Die Koppelstange 26 besitzt eine feste Länge und ist einerseits in dem dritten Punkt C und andererseits in dem dritten Punkt F gelenkig gelagert. Eine gelenkige Lagerung der Koppelstange 26 in den dritten Punkte C und F kann beispielsweise als Kugelgelenk ausgeführt sein. Dabei weisen beispielsweise die freien Enden der Koppelstange Kugeln auf. In den dritten Punkten C und F des Halterahmens sind Aufnahmen für die Kugeln beispielsweise in Form von Kugelpfannen angeordnet. Die Kugeln sind in die Aufnahmen eingeclipt. Es ist auch denkbar, eine oder beide Kugeln in dem dritten Punkt C und/oder dem dritten Punkt F anzuordnen und die Koppelstange 26 an dem entsprechenden Ende mit einer Aufnahme für die Kugeln zu versehen. Mit der Koppelstange 26 werden um die horizontale Achse eines Lichtmoduls herum erfolgende Schwenkbewegungen zeitgleich so auf das andere Lichtmodul übertragen, dass beide Halterahmen um gleiche Winkel verschwenkt werden, wodurch auch die von beiden Lichtmodulen ausgehenden Lichtbündel um gleiche Winkel verschwenkt werden.

Die Ausführungen zu den Kugelgelenken gelten auch für die weiter unten unter Bezug auf die Figuren 3 und 4 erläuterten Ausführungsbeispiele erfindungsgemäßer Scheinwerfer.

Um stets eine regelkonforme Lichtverteilung zu erzielen ist die Lage der Lichtmodule 12, 14 relativ zu dem starr mit dem übrigen Fahrzeug verbundenen Gehäuse 16 einstellbar. Mit der Einstellung der Lage der Lichtmodule ist eine Einstellung der Lichtabstrahlrichtung verbunden. Dabei wird zwischen einer Grundeinstellung und einer Justage unterschieden.

Die Justage bedeutet eine einmalige Einstellung eines Lichtmoduls im Scheinwerfer relativ zu dem anderen Lichtmodul. Die Justage erfordert in der Regel ein Spezialwerkzeug und wird meist bei der Fertigung der Scheinwerfer ausgeführt. Durch die Verwendung eines Spezialwerkzeugs sollen spätere, unsachgemäße Manipulationen vermieden werden.

Die Justage erfolgt bei dem in der Figur dargestellten Scheinwerfer folgendermaßen: Zunächst wird das erste Lichtmodul 12 im Werk zu einer festgelegten Referenz einer Ausleuchtvorrichtung eingestellt, und anschließend wird das zweite Lichtmodul 14 relativ zu dem ersten Lichtmodul auf eine feste Solllage justiert. Dazu wird das zweite Lichtmodul 14 zum Beispiel über Einstellschrauben in dem ersten Punkt D und in dem zweiten Punkt E bewegt. Für eine vertikale Justage müssen der erste Punkt D und der zweite Punkt E jeweils gleich weit aus der Zeichenebene heraus oder in die Zeichenebene hinein bewegt werden. Dadurch wird das zweite Lichtmodul 14 in dem dritten Punkt F aus der Zeichenebene heraus oder hinein gekippt. Die Kippung des Lichtmoduls um den dritten Punkt F verschiebt die Lichtverteilung in einem Vorfeld des Kraftfahrzeugs in vertikaler Richtung. Eine horizontale Justage erfolgt durch Bewegung nur des zweiten Punktes E. Eine Bewegung des zweiten Punktes E aus der Zeichenebene heraus oder in die Zeichenebene hinein, dreht das zweite Lichtmodul 14 um seine zweite Achse 24. Die Drehung um die zweite Achse 24 verschiebt die Lichtverteilung in einem Vorfeld des Kraftfahrzeugs in horizontaler Richtung.

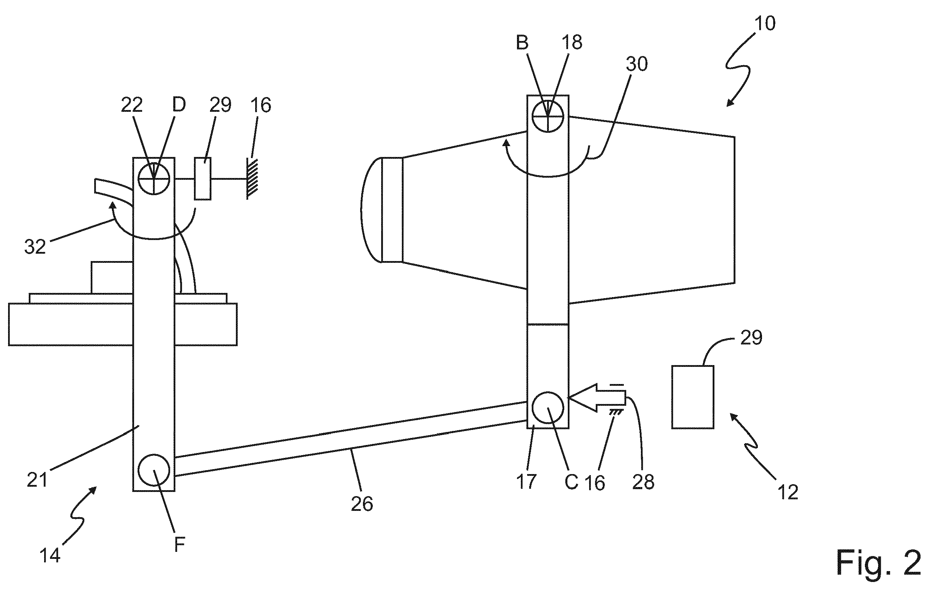

Die Grundeinstellung bedeutet eine Einstellung der Scheinwerfer in eingebautem Zustand im Fahrzeug relativ zur Fahrbahn. Die Grundeinstellung ist mit Bordmitteln oder einem üblichen Werkzeug wiederholbar vom Endkunden oder einer Servicewerkstatt durchführbar. Bei der Grundeinstellung ist die Bewegung des ersten Lichtmoduls 12 um seine erste, horizontale Achse 18 mit der Bewegung des zweiten Lichtmoduls 14 um dessen erste, horizontale Achse 22 gekoppelt. Die Vorgehensweise bei der Grundeinstellung und der Justage wird nachfolgend anhand von Figur 2 erläutert.

In den nachfolgenden Erläuterungen der Figuren werden Bewegungsrichtungen beschrieben, die in den Zeichnungen durch entsprechende Pfeile kenntlich gemacht sind. Es versteht sich, dass zu jeder in den Figuren dargestellten und in der Beschreibung erläuterten Bewegungsrichtung auch eine Bewegung in einer entsprechend entgegengesetzten Richtung erzeugt werden kann. Aus Gründen der Übersichtlichkeit ist sowohl in den Zeichnungen als auch in der Beschreibung nur eine Bewegungsrichtung dargestellt oder erläutert.

Figur 2 zeigt den Scheinwerfer 10 in einer Seitenansicht quer zur Fahrtrichtung, die in der Figur nach links gerichtet ist. Das erste Lichtmodul 12 ist in der Figur rechts von dem zweiten Lichtmodul 14 und damit in Fahrtrichtung gesehen hinter dem zweite Lichtmodul 14 angeordnet. Der dritte Punkt C des ersten Lichtmoduls 12 ist über die Koppelstange 26 mit dem dritten Punkt F des zweiten Lichtmoduls 14 gelenkig verbunden.

Bei der Grundeinstellung greift eine Kraft 28 in dem dritten Punkt C an. Die Kraft 28 wird durch ein Stellmittel aufgebracht. Das Stellmittel ist beispielsweise als Einstellschraube, deren Spitze in dem dritten Punkt C an dem Halterahmen anliegt und die in einem mit dem Gehäuse 16 starr verbundenen Gewinde gehalten wird, ausgeführt. Die Kraft 28 kann auch durch ein Stellglied 29 der Leuchtweitenregulierung (LWR) aufgebracht sein. Durch die Kraft 28 wird das erste Lichtmodul 12 um seine erste Achse 18 gedreht. Die Drehung 30 ist in der Figur durch einen zur ersten Achse 18 koaxialen Pfeil symbolisiert. Die Koppelstange 26 überträgt die Bewegung auf den dritten Punkt F des zweiten Lichtmoduls 14. Das zweite Lichtmodul 14 wird dadurch um seine erste Achse 22 gedreht. Die Drehung 32 ist in der Figur 2 durch einen zu der ersten Achse 22 koaxialen Pfeil gekennzeichnet.

Damit die Drehung 32 des zweiten Lichtmoduls 14 um seine erste Achse 22 möglichst identisch zu der Drehung 30 des ersten Lichtmoduls 12 um seine erste Achse 18 erfolgt, muss ein Abstand zwischen dem ersten Punkt D und dem dritten Punkt F des zweiten Lichtmoduls 14 gleich einem Abstand zwischen dem ersten Punkt A und dem dritten Punkt C des ersten Lichtmoduls 12 sein. Unter einer identischen Drehung wird hier eine Drehung um identische Drehwinkel verstanden. Außerdem muss die Lagerebene des zweiten Lichtmoduls parallel zu der Lagerebene des ersten Lichtmoduls angeordnet sein. Die geforderte Parallelität der Lagerebenen hat den Nachteil, dass je nach Anordnung der Lichtmodule Funktionsbereiche des zweiten Lichtmoduls 14 den Lichtaustritt des ersten Lichtmoduls 12 verdecken oder von außen durch die Abdeckscheibe des Scheinwerfers sichtbar sind.

Die vertikale Justage des zweiten Lichtmoduls 14, also eine Kippung des zweiten Lichtmodul 14 um seine erste Achse 22 erfolgt durch die gleichmäßige Verschiebung des ersten Punktes D und des zweiten Punktes E in der Zeichnung nach links oder rechts. Die Verstellung wird durch ein Stellmittel 33 ausgeführt. Das Stellmittel 29 ist beispielsweise eine Einstellschraube, die in ein ortsfest mit dem Gehäuse verbundenes Gewinde eingeschraubt ist und an deren Ende die Aufnahme für das Kugelgelenk angeordnet ist. Durch die gleichmäßige Verschiebung des ersten Punktes D und des zweiten Punktes E wird das zweite Lichtmodul 14 um seinen dritten Punkt F gekippt. Damit ändert sich der Abstrahlwinkel des zweiten Lichtmoduls 14 zur Horizontalen und damit wird seine Lichtverteilung im Vorfeld des Kraftfahrzeugs vertikal verschoben. Die Lage des ersten Lichtmoduls oder dessen Lichtverteilung bleibt davon unbeeinflusst.

Die Erläuterungen zur Notwendigkeit und zur Funktion der Justage und der Grundeinstellung gelten mit den notwendigen Änderungen auch für die weiter unten unter Bezug auf die Figuren 3 und 4 erläuterten Ausführungsbeispiele erfindungsgemäßer Scheinwerfer.

Die Figur 3 zeigt ein Ausführungsbeispiel eines Scheinwerfers 10 in einer Seitenansicht quer zur Fahrtrichtung, die in der Figur nach links gerichtet ist. Das erste Lichtmodul 12 ist in der Zeichnung rechts neben und damit in Fahrtrichtung gesehen hinter dem zweiten Lichtmodul 14 angeordnet. Der Scheinwerfer 10 unterscheidet sich vom Stand der Technik in der Ausführung der Koppelmechanik, die den dritten Punkt C des ersten Lichtmoduls 12 mit dem dritten Punkt F des zweiten Lichtmoduls 14 verbindet.
Die Koppelmechanik weist eine zwei Krafteinleitungspunkte aufweisende erste Koppelstange 34, einen zwei Krafteinleitungspunkte G, I und eine Lagerung H aufweisenden zweiseitigen Hebel 36 und eine zwei Krafteinleitungspunkte aufweisende zweite Koppelstange 38 auf. Dabei ist der der Hebel 36 in seiner Lagerung H um eine im Scheinwerfer 10 bei dessen bestimmungsgemäßer Verwendung horizontal liegende Achse schwenkbar gelagert. Die erste Koppelstange 34 ist in einem ihrer Krafteinleitungspunkte an das erste Lichtmodul 12 und in ihrem anderen Krafteinleitungspunkt an einen ersten Krafteinleitungspunkt G des Hebels 36 angelenkt. Die zweite Koppelstange 38 in einem ihrer Krafteinleitungspunkte an das zweite Lichtmodul 14 und in ihrem anderen Krafteinleitungspunkt an einen zweiten
Krafteinleitungspunkt I des Hebels 36 angelenkt.

Durch eine geeignete Dimensionierung (Länge) der Hebelarme können die Verstellwinkel der Module angepasst werden. In dem Fall müsste der Abstand zwischen H und I verkleinert werden, damit die Verstellung der Module synchron bleibt.

Der dritte Punkt C des ersten Lichtmoduls 12 ist durch die erste Koppelstange 34 mit dem ersten Krafteinleitungspunkt G des zweiseitigen Hebels 36 verbunden. Der Hebel 36 ist in einer Lagerung H um eine in dem Gehäuse 16 ortsfest angeordnete Achse frei schwenkbar gelagert. Bei dem in der Figur 3 dargestellten Ausführungsbeispiel handelt es sich bei der Lagerung H um ein Festlager. Das bedeutet, dass die Position der Lagerung H im Gehäuse nicht verstellbar ist. Der Hebel 36 weist einen ersten Hebelarm und einen senkrecht zu dem ersten Hebelarm angeordneten zweiten Hebelarm auf. Der erste Hebelarm verbindet den ersten Krafteinleitungspunkt G des Hebels 36 mit der Lagerung H des Hebels 36. Der zweite Hebelarm verbindet die Lagerung H des Hebels 36 mit einem zweiten Krafteinleitungspunkt I des Hebels 36.

Der zweite Krafteinleitungspunkt I des Hebels 36 ist mit einem Ende der zweiten Koppelstange 38 gelenkig verbunden, deren anderes Ende mit dem dritten Punkt F des zweiten Lichtmoduls 14 gelenkig verbunden ist. Eine gelenkige Verbindung erfolgt auch hier bevorzugt über Kugelgelenke. Die voranstehend beschriebene Koppelmechanik weist die erste Koppelstange 34, den Hebel 36 und die zweite Koppelstange 38 auf und ermöglicht eine Anordnung der Lagerebene des zweiten Lichtmoduls 14 auch bei in Fahrtrichtung direkt hintereinander angeordneten Lichtmodulen außerhalb eines Strahlengangs des ersten Lichtmoduls 12, in der Horizontalen. Das heißt die erste Achse 22 und die zweite Achse 24 des zweiten Lichtmoduls liegen in einer Ebene, die im Wesentlichen parallel zur Fahrbahn liegt. Dadurch verdecken Funktionsbereiche des zweiten Lichtmoduls 14 nicht den Lichtaustritt des ersten Lichtmoduls 12 oder werden beim Kippen um die erste Achse durch die Abdeckscheibe des Scheinwerfers von außen sichtbar.

Die Grundeinstellung des Kraftfahrzeugscheinwerfers 10 wird wie folgt durchgeführt: Die Kraft 28 greift im dritten Punkt C des ersten Lichtmoduls 12 an. Dadurch erfährt das erste Lichtmodul 12 eine Drehung 30 um seine horizontale, erste Achse 18. Die erste Koppelstange 34 überträgt die Bewegung auf den ersten Krafteinleitungspunkt G. Der Hebel 36 führt dadurch eine Drehung 40 um die Lagerung H aus. Die Lagerung H ist bevorzugt eine an wenigstens zwei Punkten gestützte Lagerung, deren Lagerachse senkrecht zur Zeichnungsebene der Figuren 3 und 4 verläuft. Die Drehung 40 ist in der Figur durch einen zu der Lagerung H konzentrischen Pfeil gekennzeichnet. Durch die Drehung 40 führt der zweite Krafteinleitungspunkt I eine Kreisbewegung um die Lagerung H aus. Der Radius dieser Kreisbewegung entspricht dem Abstand des zweiten Krafteinleitungspunktes I von der Lagerung H. Die zweite Koppelstange 38 überträgt die Bewegung auf den dritten Punkt F des zweiten Lichtmoduls 12. Der dritte Punkt F folgt der Bewegung des zweiten Krafteinleitungspunktes I nach unten. Dadurch führt das zweite Lichtmodul 14 eine Drehung 42 um seine erste Achse 22 aus. Die Drehung 42 ist der Figur 3 durch einen Pfeil gekennzeichnet.
Es ist beispielsweise bevorzugt, die erste Achse 22 des zweiten Lichtmoduls 14 so anzuordnen, dass der Schwerpunkt des zweiten Lichtmoduls 14 auf der ersten Achse 22 liegt. Das bedeutet, dass die Gewichtskraft des Lichtmoduls 14 kein Moment auf die erste Achse 18 ausübt und somit das Lichtmodul 14 mechanisch stabil gelagert ist.

Die mehrfache Überführung einer linearen Bewegung in eine zentrische Bewegung und umgekehrt erzeugt unter Umständen eine Kinematik der Koppelmechanik, die ursächlich dafür ist, dass die Drehung 42 des zweiten Lichtmoduls 14 nicht vollständig identisch zu der Drehung 30 des ersten Lichtmoduls 12 erfolgt. Da die geforderte Einstellbarkeit in einem kleinen Winkelbereich zwischen + 5° und -5° liegt und die gegebenenfalls auftretenden Abweichungen noch viel kleiner sind, ist eine Abweichung der Drehung 42 von der Drehung 30 aber vernachlässigbar.

Die Justage des zweiten Lichtmoduls 14 in horizontaler Richtung, also nach rechts oder links, erfolgt zum Beispiel wie beim Gegenstand der Figuren 1 und 2 über eine Verstellung der Position der Lagerpunktes E, der im Fall der Fig. 3 gewissermaßen hinter der Zeichnungsebene und dem Punkt D liegt. Eine solche Verstellung erfolgt zum Beispiel mit Hilfe einer Einstellschraubenmechanik. Die Stellbewegung erfolgt in der horizontalen Ebene in Lichtabstrahlrichtung oder entgegengesetzt zur Lichtabstrahlrichtung. Alternativ zu einer Verstellung im Punkt E erfolgt eine solche Verstellung im Rahmen einer Ausgestaltung im Punkt D. Eine Justage in vertikaler Richtung kann bei dem Gegenstand der Fig. 3 dadurch erfolgen, dass die erste Achse 22 durch eine dafür eingerichtete Verstellmechanik in Richtung der vertikalen Achse 24 verstellt wird. Für eine solche Verstellung weist der Gegenstand der Fig. 3 bevorzugt für den in Fig. 3 nicht sichtbaren Punkt E und den Punkt D je eine Verstellschraubenmechanik auf. Durch eine identische Verdrehung der Verstellschrauben wird das Lichtbündel dann aufwärts oder abwärts geschwenkt, wobei sich diese Bewegung praktisch nicht über die Koppelmechanik auf das erste Lichtmodul und dessen Lichtbündel überträgt.

Figur 4 zeigt ein weiteres Ausführungsbeispiel eines erfindungsgemäßen Scheinwerfers, bei dem eine Justage in vertikaler Richtung anders verwirklicht ist. Im Einzelnen zeigt die Figur 4 einen Scheinwerfer 10 in einer Seitenansicht, bei der der Betrachter quer zur Lichtabstrahlrichtung auf den Scheinwerfer blickt. Das erste Lichtmodul 12 ist in der Figur rechts neben und damit in Fahrtrichtung gesehen hinter dem zweiten Lichtmodul 14 angeordnet. Die beiden Lichtmodule 12 und 14 sind über die erste Koppelstange 34, den Hebel 36 und die zweite Koppelstange 38 so miteinander verbunden, wie es unter Bezug auf die Figur 3 erläutert worden ist. Die Lagerung H ist ortsfest auf einem Schlitten 43 angeordnet. Der Schlitten 43 ist in dem Gehäuse 16 so geführt, dass er in Lichtabstrahlrichtung verschiebbar ist.

Eine Bewegung der Lagerung H entlang einer Richtung 44, führt dazu, dass der Hebel 36 eine Drehung 46 um den ersten Krafteinleitungspunkt G ausführt. Die Drehung 46 bewirkt, dass der zweite Krafteinleitungspunkt I eine Bewegung 48 auf einer Kreisbahn mit einem Radius der dem Abstand der Punkte G und I voneinander entspricht ausführt. Die zweite Koppelstange 38 überträgt die nach oben gerichtete Bewegung 48 in dem dritten Punkt F auf das zweite Lichtmodul 14. Das zweite Lichtmodul 14 führt daraufhin eine Drehung 50 um seiner erste Achse 22 aus. Die Drehung 50 ist in der Figur 4 durch einen zu der ersten Achse 22 konzentrischen Pfeil gekennzeichnet. Das erste Lichtmodul 12 bleibt dabei in seiner Lage unbeeinflusst. Die Justage des zweiten Lichtmoduls 14 erfolgt somit ohne Rückwirkung auf das erste Lichtmodul 12. Gegenüber dem Stand der Technik ist die Justage des zweiten Lichtmoduls vereinfacht, da hier nur die Lagerung H längs zur Fahrtrichtung verschoben wird.

Außerdem ist es damit möglich, den ersten Punkt D des zweiten Lichtmoduls 14 als Festlager auszuführen, das ortsfest im Gehäuse angeordnet ist. Dadurch wird das zweite Lichtmodul stabiler im Gehäuse gehalten.

## Patentansprüche

1. Kraftfahrzeugscheinwerfer (10)) mit einem ersten Lichtmodul (12) und einem zweiten Lichtmodul (14), wobei jedes der beiden Lichtmodule (12,14) um eine erste Achse (18, 22) und um eine zweite Achse (20, 24) in einem Gehäuse des Scheinwerfers schwenkbar ist, und wobei die beiden Lichtmodule (12, 14) über eine Koppelmechanik beweglich so miteinander verbunden sind, dass sich eine um die jeweils erste Achse (18, 22) eines der beiden Lichtmodule (12, 14) erfolgende Schwenkbewegung auf das jeweils andere Lichtmodul (14, 12) überträgt, **dadurch gekennzeichnet, dass** die Koppelmechanik eine zwei Krafteinleitungspunkte aufweisende erste Koppelstange (34), einen zwei Krafteinleitungspunkte (G, I) und eine Lagerung (H) aufweisenden zweiseitigen Hebel (36) und eine zwei Krafteinleitungspunkte aufweisende zweite Koppelstange (38) aufweist, wobei der Hebel (36) in seiner Lagerung (H) um eine im Scheinwerfer (10) bei dessen bestimmungsgemäßer Verwendung horizontal liegende Achse schwenkbar gelagert ist, die erste Koppelstange (34) in einem ihrer Krafteinleitungspunkte so an das erste Lichtmodul (12) und in ihrem anderen Krafteinleitungspunkt so an einen ersten Krafteinleitungspunkt (G) des Hebels (36) angelenkt ist,
dass ein drittes Punkt (C) des ersten Lichtmoduls (12) durch die erste Koppelstange (34) mit dem ersten Krafteinleitungspunkt (G) des zweiseitigen Hebels (36) verbunden ist, und dass die zweite Koppelstange (38) in einem ihrer Krafteinleitungspunkte so an das zweite Lichtmodul (14) und in ihrem anderen Krafteinleitungspunkt so an einen zweiten Krafteinleitungspunkt (I) des Hebels (36) angelenkt ist, dass der zweite Krafteinleitungspunkt (I) des Hebels mit einem Ende der zweiten Koppelstange (38) gelenkig verbunden ist, deren anderes Ende mit einem dritten Punkt (F) des zweiten Lichtmodules (14) gelenkig verbunden ist.

2. Kraftfahrzeugscheinwerfer (10) nach Anspruch 1, **dadurch gekennzeichnet, dass** die erste Achse (18, 22) bei einer bestimmungsgemäßen Verwendung des Kraftfahrzeugscheinwerfers im Fahrzeug horizontal und die zweite Achse (20, 24) bei der bestimmungsgemäßen Verwendung vertikal angeordnet ist, und wobei die erste Achse und die zweite Achse eines Lichtmoduls jeweils einen gemeinsamen Punkt aufweisen

3. Kraftfahrzeugscheinwerfer (10) nach einem der vorangehenden Ansprüche, **dadurch gekennzeichnet, dass** die Hebelarme des zweiseitigen Hebels (36) in der Lagerung (H) senkrecht zueinander angeordnet sind.

4. Kraftfahrzeugscheinwerfer (10) nach einem der vorangehenden Ansprüche, **dadurch gekennzeichnet, dass** die Hebelarme des zweiseitigen Hebels (36) gleich lang sind.

5. Kraftfahrzeugscheinwerfer (10) nach einem der vorangehenden Ansprüche, **dadurch gekennzeichnet, dass** die Lagerung des Hebels (36) ortsfest auf einem Schlitten (43) angeordnet ist und dass der Schlitten (43)in einer Führung verschiebbar im Gehäuse (16) angeordnet ist.

6. Kraftfahrzeugscheinwerfer nach einem der vorangehenden Ansprüche, **dadurch gekennzeichnet, dass** eine Summe des Abstandes von einem ersten Punkt (D) zum dritten Punkt (F) des zweiten Lichtmoduls (14) und einer Länge eines Hebelarms vom zweiten Krafteinleitungspunkt (I) zur Lagerung (H) des Hebels (36) gleich einer Summe der Länge eines Hebelarmes des Hebels (36) von der Lagerung (H) zum ersten Krafteinleitungspunkt (G) und eines Abstandes vom dritten Punkt (C) zu einem ersten Punkt (A) des ersten Lichtmoduls (12) ist.

7. Kraftfahrzeugscheinwerfer (10) nach einem der vorangehenden Ansprüche, **dadurch gekennzeichnet, dass** ein erster Punkt (D) des zweiten Lichtmoduls als Festlager ausgebildet ist.

8. Kraftfahrzeugscheinwerfer (10) nach einem der vorangehenden Ansprüche, **dadurch gekennzeichnet, dass** die erste Achse (22) des zweiten Lichtmoduls (14) durch dessen Schwerpunkt geht.

9. Kraftfahrzeugscheinwerfer (10) nach einem der vorangehenden Ansprüche, **dadurch gekennzeichnet, dass** die Koppelmechanik spielfrei und reibungsarm ausgeführt ist.

10. Kraftfahrzeugscheinwerfer nach Anspruch 6, **dadurch gekennzeichnet, dass** die ersten Punkte (A, D), zweite Punkte (B, E), die als Loslager verstellbar beweglich im Gehäuse aufgenommen sind, und/oder die dritten Punkte (C, F) der Lichtmodule (12, 14) sowie der erste Krafteinleitungspunkt (G) des Hebels (36), der zweite Krafteinleitungspunkt (I) des Hebels (36) und/oder die Lagerung (H) des Hebels (36) als Kugelgelenke ausgeführt sind.

11. Kraftfahrzeugscheinwerfer nach einem der vorhergehenden Ansprüche, **dadurch gekennzeichnet, dass** die erste Achse und die zweite Achse vom jeweiligen Lichtmodul eine Ebene aufspannen, in der das jeweilige Lichtmodul gelagert ist, und dass die Lagerebenen der beiden Lichtmodule in nicht parallelen Ebenen liegen.

12. Kraftfahrzeugscheinwerfer nach Anspruch 11, **dadurch gekennzeichnet, dass** die Lagerebene eines der beiden Lichtmodule senkrecht oder zumindest um einen konstruktiv vorgebbaren Winkel geneigt zu der Lagerebene des anderen der beiden Lichtmodule steht

13. Kraftfahrzeugscheinwerfer nach Anspruch 11 oder 12, **dadurch gekennzeichnet, dass** die Lagerebene des zweiten Lichtmoduls im Wesentlichen horizontal im Fahrzeug angeordnet ist.

14. Kraftfahrzeugscheinwerfer nach Anspruch 13, **dadurch gekennzeichnet, dass** die Lagerebene des ersten Lichtmoduls im Fahrzeug vertikal angeordnet ist.

## Claims

1. A motor vehicle headlight (10) having a first light module (12) and a second light module (14), each of the two light modules (12, 14) being pivotable about a first axis (18, 22) and about a second axis (20, 24) in a housing of the headlight, and the two light modules (12, 14) being movably connected to one another via a coupling mechanism in such a way that a pivoting motion, effected about the first axis (18, 22) of each of the two light modules (12, 14), is transmitted to the respectively other light module (14, 12), **characterized in that** the coupling mechanism has a first coupling rod (34) having two force introduction points, a double-ended lever (36) having two force introduction points (G, I) and a support (H), and a second coupling rod (38) having two force introduction points, and the lever (36) is pivotably supported in its support (H) about an axis located horizontally in the headlight (10) when it is being used as intended, and the first coupling rod (34) is hinged at one of its force introduction points to the first light module (12) and at its other force introduction point to a first force introduction point (G) of the lever (36) in such a way that a third point (C) of the first light module (12) is connected by the first coupling rod (34) to the first force introduction point (G) of the double-ended lever (36), and that the second coupling rod (38) is hinged at one of its force introduction points to the second light module (14) and at its other force introduction point to the second force introduction point (I) of the lever (36) in such a way that the second force introduction point (I) of the lever is pivotably connected to one end of the second coupling rod (38), the other end of which is pivotably connected to a third point (F) of the second light module (14).

2. The motor vehicle headlight (10) of claim 1, **characterized in that** the first axis (18, 22), when the motor vehicle headlight is used as intended, is located horizontally in the vehicle, and the second axis (20, 24), when used as intended, is located vertically, and the first axis and the second axis of a light module each have a common point.

3. The motor vehicle headlight (10) of one of the foregoing claims, **characterized in that** the lever arms of the double-ended lever (36) are located perpendicular to one another in the support (H).

4. The motor vehicle headlight (10) of one of the foregoing claims, **characterized in that** the lever arms of the double-ended lever (36) are of equal length.

5. The motor vehicle headlight (10) of one of the foregoing claims, **characterized in that** the support of the lever (36) is located in stationary fashion on a carriage (43), and that in the housing (16), the carriage (43) is located displaceably in a guide.

6. The motor vehicle headlight of one of the foregoing claims, **characterized in that** a sum of the distance from a first point (D) to the third point (F) of the second light module (14) and a length of a lever arm from the second force introduction point (I) to the support (H) of the lever (36) is equal to a sum of the length of a lever arm of the lever (36) from the support (H) to the first force introduction point (G) and a distance from the third point (C) to a first point (A) of the first light module (12).

7. The motor vehicle headlight (10) of one of the foregoing claims, **characterized in that** a first point (D) of the second light module is embodied as a fixed bearing.

8. The motor vehicle headlight (10) of one of the foregoing claims, **characterized in that** the first axis (22) of the second light module (14) passes through its center of gravity.

9. The motor vehicle headlight (10) of one of the foregoing claims, **characterized in that** the coupling mechanism is embodied in play-free and low-friction fashion.

10. The motor vehicle headlight of claim 6, **characterized in that** the first points (A, D), second points (B, E), which are received as loose bearings adjustably movably in the housing, and/or the third points (C, F) of the light modules (12, 14), and the first force introduction point (G) of the lever (36), the second force introduction point (I) of the lever (36), and/or the support (H) of the lever (36) are all embodied as ball joints.

11. The motor vehicle headlight of one of the foregoing claims, **characterized in that** the first axis and the second axis of the respective light module define a plane in which the respective light module is supported, and that the bearing planes of the two light modules are located in non-parallel planes.

12. The motor vehicle headlight of claim 11, **characterized in that** the bearing plane of one of the two light modules is perpendicular, or at least inclined by a structurally predeterminable angle, to the bearing plane of the other of the two light modules.

13. The motor vehicle headlight of claim 11 or 12, **characterized in that** the bearing plane of the second light module is located essentially horizontally in the vehicle.

14. The motor vehicle headlight of claim 13, **characterized in that** the bearing plane of the first light module is located vertically in the vehicle.

## Revendications

1. Phare de véhicule automobile (10) avec un premier module de lumière (12) et un second module de lumière (14), chacun des deux modules de lumière (12, 14) pouvant pivoter autour d'un premier axe (18, 22) et d'un second axe (20, 24) dans un boîtier du phare, et les deux modules de lumière (12, 14) étant reliés l'un à l'autre de manière mobile par un mécanisme de couplage de sorte qu'un mouvement pivotant s'effectuant autour du premier axe respectif (18, 22) de l'un des deux modules de lumière (12, 14) se transmette à l'autre module de lumière respectif (14, 12), **caractérisé en ce que** le mécanisme de couplage présente une première tige de couplage (34) présentant deux points d'application de force, un levier (36) bilatéral présentant deux points d'application de force (G, I) et un logement (H) et une seconde tige de couplage (38) présentant deux points d'application de force , le levier (36) étant logé de manière pivotante dans son logement (H) autour d'un axe se trouvant horizontal dans le phare (10) lors de son utilisation normale, la première tige de couplage (34) étant articulée au niveau de l'un de ses points d'application de force au premier module de lumière (12) et au niveau de son autre point d'application de force à un premier point d'application de force (G) du levier (36) de sorte qu'un troisième point (C) du premier module de lumière (12) soit relié par la première tige de couplage (34) au premier point d'application de force (G) du levier bilatéral (36), et **en ce que** la seconde tige de couplage (38) est articulée au niveau de l'un de ses points d'application de force au second module de force (14) et au niveau de son autre point d'application de force à un second point d'application de force (I) du levier (36) de sorte que le second point d'application de force (I) du levier soit relié par articulation à une extrémité de la seconde tige de couplage (38), dont l'autre extrémité est reliée par articulation à un troisième point (F) du second module de lumière (14).

2. Phare de véhicule automobile (10) selon la revendication 1, **caractérisé en ce que** le premier axe (18, 22) est agencé horizontalement dans le véhicule lors d'une utilisation normale du phare de véhicule automobile et le second axe (20, 24) est agencé verticalement lors de l'utilisation normale, et le premier axe et le second axe d'un module de lumière présentant respectivement un point commun.

3. Phare de véhicule automobile (10) selon l'une quelconque des revendications précédentes, **caractérisé en ce que** les bras de levier du levier bilatéral (36) sont agencés perpendiculairement l'un à l'autre dans le logement (H).

4. Phare de véhicule automobile (10) selon l'une quelconque des revendications précédentes, **caractérisé en ce que** les bras de levier du levier bilatéral (36) sont de même longueur.

5. Phare de véhicule automobile (10) selon l'une quelconque des revendications précédentes, **caractérisé en ce que** le logement du levier (36) est agencé fixement sur un chariot (43) et **en ce que** le chariot (43) est agencé de manière mobile dans un guidage dans le boîtier (16).

6. Phare de véhicule automobile (10) selon l'une quelconque des revendications précédentes, **caractérisé en ce qu'**une somme de la distance entre un premier point (D) et le troisième point (F) du second module de lumière (14) et d'une longueur d'un bras de levier entre le second point d'application de force (I) et le logement (H) du levier (36) est identique à une somme de la longueur d'un bras de levier du levier (36) entre le logement (H) et le premier point d'application de force (G) et d'une distance entre le troisième point (C) et un premier point (A) du premier module de lumière (12).

7. Phare de véhicule automobile (10) selon l'une quelconque des revendications précédentes, **caractérisé en ce qu'**un premier point (D) du second module de lumière est réalisé comme un palier fixe.

8. Phare de véhicule automobile (10) selon l'une quelconque des revendications précédentes, **caractérisé en ce que** le premier axe (22) du second module de lumière (14) passe par son centre de gravité.

9. Phare de véhicule automobile (10) selon l'une quelconque des revendications précédentes, **caractérisé en ce que** le mécanisme de couplage est réalisé sans jeu et avec peu de frottement.

10. Phare de véhicule automobile selon la revendication 6, **caractérisé en ce que** les premiers points (A, D), les deuxièmes points (B, E) qui sont logés comme paliers libres de manière mobile et réglable dans le boîtier, et/ou les troisième points (C, F) des modules de lumière (12, 14) ainsi que le premier point d'application de force (G) du levier (36), le second point d'application de force (I) du levier (36) et/ou le logement (H) du levier (36) sont réalisés comme articulations sphériques.

11. Phare de véhicule automobile selon l'une quelconque des revendications précédentes, **caractérisé en ce que** le premier axe et le second axe du module de lumière respectif définissent un plan, dans lequel le module de lumière respectif est situé, et **en ce que** les plans de palier des deux modules de lumière se trouvent dans des plans non parallèles.

12. Phare de véhicule automobile selon la revendication 11, **caractérisé en ce que** le plan de palier de l'un des deux modules de lumière est perpendiculaire ou incliné au moins selon un angle constructivement possible par rapport au plan de palier de l'autre des deux modules de lumière.

13. Phare de véhicule automobile selon la revendication 11 ou 12, **caractérisé en ce que** le plan de palier du second module de lumière est agencé sensiblement horizontalement dans le véhicule.

14. Phare de véhicule automobile selon la revendication 13, **caractérisé en ce que** le plan de palier du premier module de lumière est agencé verticalement dans le véhicule.
